(19) **Europäisches Patentamt European Patent Office Office européen des brevets**

(11) **EP 2 385 345 B1**

(12) **FASCICULE DE BREVET EUROPEEN**

(45) Date de publication et mention de la délivrance du brevet:
**09.01.2013 Bulletin 2013/02**

(51) Int Cl.:
***G01C 19/66*** *(2006.01)*

(21) Numéro de dépôt: **11165037.0**

(22) Date de dépôt: **06.05.2011**

(54) **GYROLASER A ETAT SOLIDE MULTIOSCILLATEUR STABILISE PASSIVEMENT PAR UN DISPOSITIF A CRISTAL DOUBLEUR DE FREQUENCE**

Laserkreisel in stabilisiertem Festzustand mit Multivibrator, der durch eine Vorrichtung mit einem Frequenzverdoppelungskristall passiv stabilisiert wurde

Multi-oscillating solid-state gyrolaser passively stabilised by a device with frequency-doubler crystal

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.05.2010 FR 1001969**

(43) Date de publication de la demande:
**09.11.2011 Bulletin 2011/45**

(73) Titulaire: **Thales
92200 Neuilly Sur Seine (FR)**

(72) Inventeurs:
• **Schwartz, Sylvain
78470, SAINT-REMY LES CHEVREUSE (FR)**
• **Feugnet, Gilles
91120, PALAISEAU (FR)**
• **Pocholle, Jean-Paul
91290, LA NORVILLE (FR)**

(74) Mandataire: **Bréda, Jean-Marc et al
Marks & Clerk France
Conseils en Propriété Industrielle
Immeuble " Visium "
22, avenue Aristide Briand
94117 Arcueil Cedex (FR)**

(56) Documents cités:
**EP-A1- 0 429 319     FR-A1- 2 876 447
FR-A1- 2 925 153**

**Description**

Le domaine de l'invention est celui des gyromètres laser, utilisés notamment dans le domaine de l'aéronautique pour la navigation inertielle, et plus particulièrement celui des gyrolasers à état solide.

La plupart des gyrolasers actuellement disponibles commercialement sont constitués d'une cavité en zérodur contenant un mélange gazeux d'hélium et de néon dans laquelle coexistent deux ondes optiques contra-propagatives, c'est-à-dire se propageant dans des sens opposés à l'intérieur de la cavité. On sait que, dans ce type de laser, lorsque les vitesses de rotation sont faibles, les deux ondes contra-propagatives ont la même fréquence. Ce problème de verrouillage en fréquence aux faibles vitesses de rotation ou « zone aveugle » est habituellement résolu grâce à la mise en vibration de la cavité autour de son axe de rotation par une activation mécanique. On crée ainsi artificiellement une vitesse de rotation suffisante pour empêcher le verrouillage en fréquence. Cette dernière technique est toutefois une source non négligeable de bruit en raison du phénomène de « marche au hasard » correspondant à l'accumulation d'une phase aléatoire à chaque traversée de zone aveugle.

Pour éliminer ces inconvénients, un autre type de gyrolaser a été mis au point. Le principe physique consiste à faire coexister non pas deux mais quatre ondes dans la cavité, correspondant à deux états de polarisation orthogonaux et deux sens de propagation opposés. Le brevet de K. Andringa de référence US 3 854 819 décrit un dispositif de cette sorte. Ce type de laser appelé aussi « gyrolaser multioscillateur » associé à un biais en fréquence magnéto-optique permet de supprimer le phénomène de « zone aveugle » sur toute la plage d'utilisation du gyrolaser tout en s'affranchissant, par une recombinaison astucieuse des quatre modes présents dans la cavité laser, des fluctuations dudit biais magnéto-optique, qui constituent sans cela une source de dérive trop importante pour la plupart des applications des gyrolasers.

Parallèlement, il est possible de réaliser des gyrolasers avec des milieux amplificateurs à état solide, par exemple un cristal de Nd:YAG pompé par diode laser. La publication de S. Schwartz, G. Feugnet, P. Bouyer, E. Lariontsev, A. Aspect and J.-P. Pocholle parue dans Phys. Rev. Lett. 97, 093902 (2006) décrit un gyrolaser de ce type.

Dans ces dispositifs, le phénomène de compétition entre modes est contrebalancé non plus par l'effet Doppler comme c'est le cas dans les gyrolasers à gaz de type Hélium-Néon mais par un dispositif additionnel de stabilisation, par exemple la mise en oeuvre d'une boucle de contre-réaction créant des pertes différentielles proportionnelles à la différence d'intensité entre les modes contra-propagatifs du laser. On parle de « stabilisation active ». Un tel dispositif, s'il s'avère relativement simple à mettre en oeuvre pour un gyrolaser à état solide de type « deux ondes » tel que décrit dans le brevet de S. Schwartz, G. Feugnet et J.-P. Pocholle de référence US 7 548 572 est en revanche plus compliqué à mettre en oeuvre dans sa version « 4 ondes » ou multioscillateur tel que décrit dans le brevet de S. Schwartz, G. Feugnet et J.-P. Pocholle de référence US 7 230 686. La figure 1 représente un gyrolaser de ce type. Il comprend essentiellement :

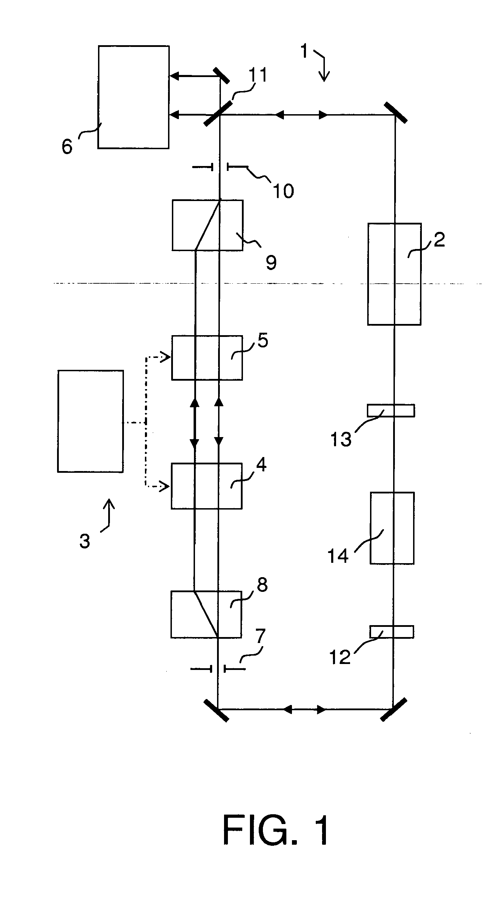

- une cavité optique 1 en anneau comprenant au moins un miroir partiellement réfléchissant 11, permettant de traiter les modes contra-propagatifs hors de la cavité 1 ;
- un milieu amplificateur 2 à l'état solide ;
- un dispositif d'asservissement 3 commandant le ou les rotateurs optiques 4 et 5 (flèches en pointillés sur la figure 1) ;
- un dispositif de mesure 6 ;
- un système optique comprenant:

  - un premier ensemble optique constitué d'un premier rotateur optique 5 à effet non réciproque et d'un rotateur optique 4 à effet réciproque ;
  - un second ensemble optique constitué d'un premier dispositif de filtrage spatial 7 et d'un premier élément optique de séparation de polarisation 8 ;
  - un troisième ensemble optique constitué d'un second dispositif de filtrage spatial 10 et d'un second élément optique de séparation de polarisation 9, le second ensemble optique et le troisième ensemble optique étant disposés de part et d'autre du premier ensemble optique, le troisième ensemble optique étant disposé symétriquement au second ensemble optique ;
  - un quatrième ensemble optique constitué successivement d'une première lame quart d'onde 12, d'un second rotateur optique 14 à effet non réciproque et d'une seconde lame quart d'onde 13 dont les axes principaux sont perpendiculaires tournés à 90° par rapport à ceux de la première lame quart d'onde.

Le gyrolaser selon l'invention est plus simple à réaliser. Il met en oeuvre un gyrolaser à état solide multioscillateur en utilisant non plus un dispositif de stabilisation actif agissant sur les pertes différentielles, mais un dispositif de stabilisation passif impliquant des effets non-linéaires dans la cavité laser, beaucoup plus simple à mettre en oeuvre.

Plus précisément, l'invention a pour objet un gyrolaser permettant la mesure de la vitesse angulaire ou de la position angulaire relative selon un axe de rotation déterminé, ledit gyrolaser comprenant au moins:

- une cavité optique en anneau ;
- un milieu amplificateur à l'état solide;
- un dispositif magnéto-optique à effet non réciproque;

agencés de façon que quatre modes de propagation puissent se propager à l'intérieur de la cavité, le premier mode de propagation et le troisième mode de propagation étant polarisés linéairement dans la même direction, le second mode de propagation et le quatrième mode de propagation étant polarisés linéairement perpendiculairement au premier mode et au second mode, le premier mode de propagation et le second mode de propagation se propageant dans un premier sens dans la cavité, le troisième mode de propagation et le quatrième mode de propagation se propageant en sens inverse dans la cavité, le dispositif magnéto-optique introduisant un biais fréquentiel entre les modes se propageant dans le premier sens et les modes se propageant en sens inverse, caractérisé en ce que ladite cavité comporte également un dispositif stabilisateur de l'intensité des quatre modes de propagation à des niveaux sensiblement équivalents, ledit dispositif comportant au moins un élément optique en cristal non-linéaire du type cristal doubleur de fréquence.

Préférentiellement, l'élément optique est un cristal biréfringent agencé de façon à générer, à partir d'un mode de propagation ayant une première fréquence optique un faisceau lumineux à une seconde fréquence optique double de la première fréquence.

Avantageusement, dans une première configuration, le dispositif stabilisateur comporte deux éléments optiques en cristal biréfringent, identiques en forme de lames à faces planes et parallèles, les faces étant disposées perpendiculairement à l'axe de propagation des différents modes de propagation, les deux éléments étant assemblés par une face commune, l'axe cristallographique du premier élément étant perpendiculaire à l'axe cristallographique du second élément. L'élément optique peut être en cristal de béta-borate de baryum ou « BBO » ou $\beta BaB_2O_4$.

Avantageusement, dans une seconde configuration, l'élément optique comprend un empilement de couches minces planes régulièrement alternées, d'épaisseur identique, réalisées dans le même cristal biréfringent uniaxe négatif, les faces des différentes couches étant disposées perpendiculairement à l'axe de propagation des différents modes de propagation, l'axe optique de chaque couche étant parallèle au plan de la couche et orienté dans le même sens et la même direction dans les différentes couches, les directions de polarisation des différents modes de propagation étant orientées à 45 degrés dudit axe optique, le signe du coefficient non linéaire effectif de chaque couche étant inverse de la couche mince suivante. Dans ce cas, l'épaisseur (A) de chaque couche vaut $\Lambda = 2mL_C$, m étant un nombre entier impair, $L_C$ représentant la longueur de cohérence, $L_C$ étant égale à $L_C = \dfrac{\lambda_1}{4.(n_2 - n_1)}$, $n_2$ et $n_1$ étant les indices optiques du cristal respectivement à la seconde fréquence optique et à la première fréquence optique. L'élément optique peut être en niobate de lithium ou $LiNbO_3$.

Avantageusement, le milieu amplificateur fait office de dispositif stabilisateur. Dans ce cas, le milieu amplificateur peut être en yttrium calcium oxyborate ou YCOB ou $YCa_4O(BO_3)_3$ dopé par du néodyme ou en yttrium aluminium borate ou YAB ou $YAl_3(BO_3)_4$ dopé par du néodyme.

L'invention sera mieux comprise et d'autres avantages apparaîtront à la lecture de la description qui va suivre donnée à titre non limitatif et grâce aux figures annexées parmi lesquelles:

La figure 1 déjà décrite représente un gyrolaser à état solide et à quatre modes de propagation selon l'art antérieur ;
La figure 2 représente un gyrolaser à état solide et à quatre modes de propagation selon l'invention ;
La figure 3 représente le principe de fonctionnement d'un dispositif à cristal doubleur de fréquence ;
La figure 4 représente les différentes fréquences des quatre modes de propagation circulant dans la cavité ;
La figure 5 représente le principe du doublement de fréquence pour les modes de propagation polarisés linéairement selon une direction donnée pour un cristal fonctionnant en accord de phase ;
La figure 6 représente le principe du doublement de fréquence pour les modes de propagation polarisés linéairement selon une direction donnée et les modes de propagation polarisés linéairement selon une direction perpendiculaire pour un dispositif fonctionnant en accord de phase ;
La figure 7 représente le principe du doublement de fréquence pour les modes de propagation polarisés linéairement selon une direction donnée et les modes de propagation polarisés linéairement selon une direction perpendiculaire pour un dispositif fonctionnant en quasi-accord de phase.

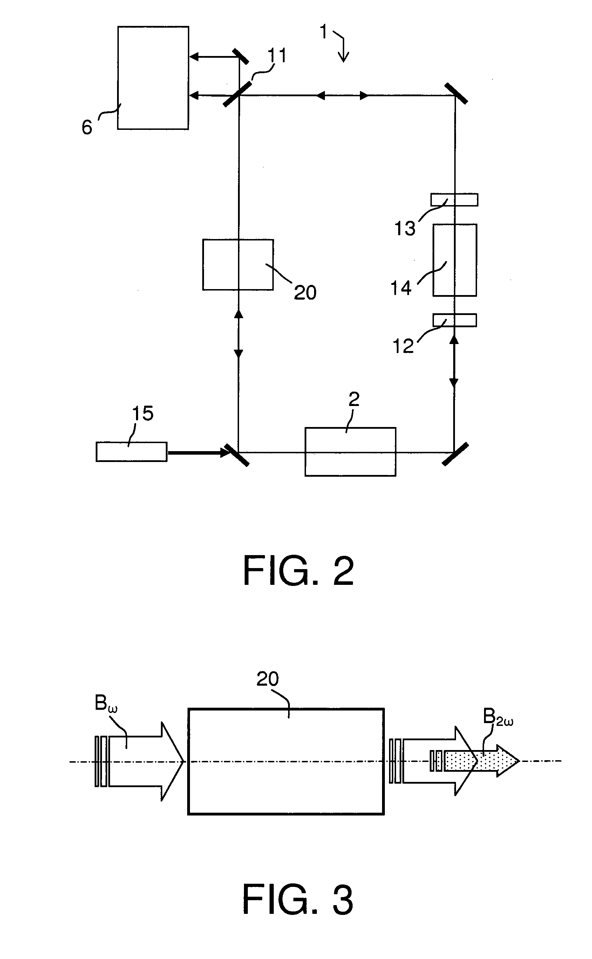

Le schéma de principe de l'invention est donné en figure 2. Il comprend essentiellement :

- une cavité optique 1 en anneau comprenant au moins un miroir partiellement réfléchissant 11 permettant de traiter les modes contra-propagatifs hors de la cavité 1. Sur la figure 2, la cavité comporte au total quatre miroirs plans.

Au moins un des miroirs de la cavité peut être courbe pour garantir la stabilité optique de la cavité ;

- un milieu amplificateur 2 à l'état solide ;
- un dispositif de mesure 6. Ce type de dispositif est bien connu de l'homme du métier et ne sera pas détaillé dans le cadre de cette invention ;
- un système optique comprenant un ensemble optique constitué successivement d'une première lame quart d'onde 12, d'un second rotateur optique 14 à effet non réciproque et d'une seconde lame quart d'onde 13 dont les axes principaux sont tournés à 90° par rapport à ceux de la première lame quart d'onde ;
- un dispositif stabilisateur 20 de l'intensité des modes de propagation comportant au moins un élément optique en cristal non-linéaire du type cristal doubleur de fréquence. On entend par dispositif doubleur de fréquence un dispositif tel que représenté sur la figure 3, c'est-à-dire que, lorsque le dispositif 20 est traversé par un faisceau optique $B_\omega$ à une fréquence $\omega$, une partie du faisceau transmis est convertie par le dispositif en un faisceau $B_{2\omega}$ généré à une fréquence $2\omega$.

Quatre modes de propagation se propagent à l'intérieur de la cavité, le premier mode de propagation et le troisième mode de propagation étant polarisés linéairement dans la même direction, le second mode de propagation et le quatrième mode de propagation étant polarisés linéairement perpendiculairement au premier mode et au troisième mode, le premier mode de propagation et le second mode de propagation se propageant dans un premier sens dans la cavité, le troisième mode de propagation et le quatrième mode de propagation se propageant en sens inverse dans la cavité.

Le milieu à gain à état solide peut être, par exemple, un cristal de Nd:YAG pompé par une diode laser 15 comme représenté sur la figure 2. Au moins un des miroirs de la cavité est traité de façon à transmettre le rayonnement optique issu de la diode laser 15. Un tel milieu doit pouvoir fournir un gain sensiblement équivalent aux deux états de polarisation de façon à permettre la génération et la circulation de modes de propagation polarisés selon deux axes de polarisation perpendiculaires. L'utilisation telle quelle d'un milieu à gain polarisant, comme le Nd:YVO$_4$ est donc exclue. Avantageusement, le milieu à gain peut être constitué d'un cristal de Nd:YAG taillé selon l'un de ses axes cristallographiques et orienté selon les états propres de la cavité laser, comme décrit dans la demande de brevet WO 2009/077314 de S. Schwartz, G. Feugnet et J.-P. Pocholle afin de minimiser le couplage entre modes orthogonaux. Dans ce dernier cas, le pompage utilisé est soit dépolarisé, soit polarisé linéairement et orienté à 45° par rapport aux axes du cristal.

Le générateur de biais magnéto-optique permet d'assurer la séparation en fréquence des modes contra-propagatifs et ainsi d'éliminer le phénomène de « zone aveugle ». Comme représenté en figure 2, un tel élément est typiquement constitué de deux lames quart d'onde, placées de part et d'autre d'un rotateur Faraday qui peut être par exemple un cristal disposé dans un solénoïde. Les états propres de la cavité, linéaires à l'extérieur de cet élément, deviennent circulaires sous l'action d'une première lame quart d'onde et subissent un déphasage proportionnel au champ magnétique du rotateur Faraday avant de devenir de nouveau linéaires sous l'action de la deuxième lame.

Les états propres de la cavité laser ainsi définie sont linéaires à l'extérieur du générateur de biais magnéto-optique et circulaires à l'intérieur. Les valeurs propres associées à ces états propres sont principalement déterminées par trois sources d'influence potentielles:

- la biréfringence résiduelle de la cavité ;
- le générateur de biais magnéto-optique et ;
- l'effet Sagnac lié à la rotation de la cavité.

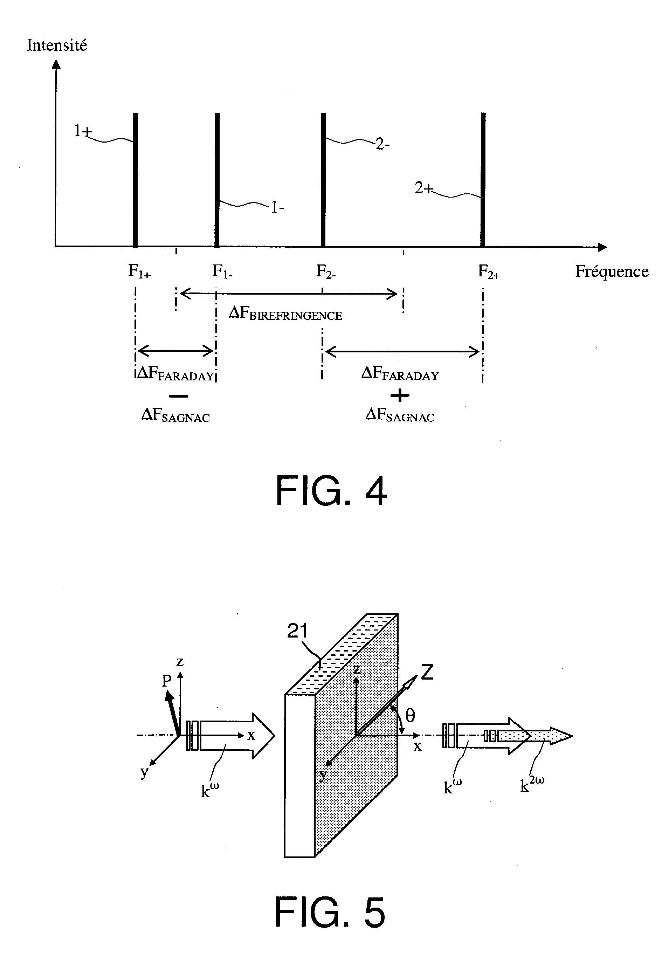

Le principe du gyrolaser multioscillateur consiste à ajuster les deux premières sources de biais afin de séparer en fréquence les quatre modes de la cavité pour supprimer la zone aveugle et obtenir une réponse Sagnac linéaire indépendamment des fluctuations desdits biais. Ce principe est illustré sur la figure 4 dans le cas de l'invention. On a représenté les fréquences propres $F_{1+}$, $F_{1-}$, $F_{2+}$ et $F_{2-}$ des 4 modes propres de la cavité laser sous l'effet des différentes influences mentionnées précédemment. Les deux paires de modes orthogonaux (notées 1 et 2) sont séparées en fréquence par la biréfringence de la cavité. Les deux paires de modes contra-propagatifs (notées + et -) sont séparées en fréquence par le générateur de biais magnéto-optique et par l'effet Sagnac lorsque le laser est en rotation. Le signal est alors détecté en faisant battre entre eux les modes de même état de polarisation, à savoir les modes (1 +) et (1-) d'une part et (2+) et (2-) d'autre part. Si l'on appelle $\Delta F_{FARADAY}$ la valeur du biais magnéto-optique et $\Delta F_{SAGNAC}$ la différence de fréquence induite par effet Sagnac, alors le battement entre les modes (1+) et (1-) va fournir la mesure de $\Delta F_{FARADAY} - \Delta F_{SAGNAC}$, tandis que le battement entre les modes (2+) et (2-) va fournir la mesure de $\Delta F_{FARADAY} + \Delta F_{SAGNAC}$. En faisant la différence entre ces deux mesures, on obtient $2.\Delta F_{SAGNAC}$ indépendamment des éventuelles fluctuations de la valeur du biais. Ce dispositif présente de plus l'avantage d'avoir une sensibilité double de celle d'un gyrolaser classique.

Il est à noter qu'une configuration non-planaire de la cavité dans laquelle les états propres de la cavité sont circulaires peut être utilisée. Les gyrolasers multioscillateurs à Hélium-Néon peuvent avoir des configurations de ce type. Dans ce cas, le dispositif de génération du biais magnéto-optique se compose uniquement du rotateur Faraday, sans les lames quart d'onde. Les principes de mesure restent les mêmes.

Comme il a été dit, le dispositif stabilisateur de l'intensité des quatre modes de propagation à des niveaux sensiblement équivalents comporte au moins un élément optique en cristal non-linéaire du type cristal doubleur de fréquence. Le principe est le suivant : le phénomène de doublage en fréquence étant proportionnel à l'intensité du mode initial, un tel dispositif va induire dans la cavité des pertes pour chacun des modes d'autant plus importantes que leur intensité est importante, et donc stabiliser le fonctionnement bidirectionnel du laser. Afin d'assurer la coexistence des quatre modes dans la cavité, le doublage s'effectue nécessairement sur les deux états de polarisation orthogonaux correspondant aux modes propres du laser. Il est important que les faisceaux doublés ne puissent se propager à l'intérieur de la cavité de façon à éviter de parasiter les modes principaux. A cette fin, il est avantageux que les miroirs de la cavité aient un traitement destiné à introduire des pertes importantes à la fréquence doublée, c'est-à-dire que le traitement des miroirs a un coefficient de réflexion faible à la fréquence doublée. Ceci ne présente aucune difficulté technique dans la mesure où, par principe, la fréquence doublée est éloignée de la fréquence initiale.

Si on suppose que l'intensité doublée par unité de temps s'écrit $K*I/I_{SAT}$, K étant le coefficient de doublage, I étant l'intensité du mode doublé, $I_{SAT}$ étant l'intensité de saturation, alors on peut écrire la condition d'auto-stabilisation comme $K > \gamma/(2\Omega^2 T_1^2)$ où $\gamma$ est le taux de pertes par unité de temps, $\Omega$ le biais en fréquence induit par le dispositif magnéto-optique et $T_1$ le temps de vie du niveau excité, de l'ordre de quelques centaines de microsecondes.

Il existe différentes configurations possibles pour réaliser le dispositif à doublage de fréquence. A titre d'exemples non limitatifs, les configurations détaillées ci-dessous sont réalisées à partir de cristaux biréfringents. On sait, en effet que, pour que le doublage de fréquence soit possible dans un matériau donné, alors l'indice optique du matériau doit être tel qu'il vérifie une propriété dite condition d'accord de phase. La condition d'accord de phase impose la réalisation de l'égalité sur les vecteurs d'onde $\overleftarrow{k}^{\omega}$ et $\overleftarrow{k}^{2\omega}$ associés aux pulsations fondamentale $\omega$ et harmonique $2\omega$ qui

s'écrit : $\overleftarrow{k}^{2\omega} = 2\overleftarrow{k}^{\omega}$ où $k^{\Omega} = \dfrac{\Omega \, n^{\Omega}}{c}$ , $n^{\Omega}$ étant l'indice de réfraction à la pulsation du champ $\Omega$. On aboutit à la condition :

$n^{2\omega} = n^{\omega}$

Les lois de dispersion spectrale de l'indice de réfraction des milieux solides isotropes ne permettent pas de réaliser cette égalité. Seul l'emploi de matériaux biréfringents anisotropes permet d'obtenir cette condition. Dans un milieu biréfringent, l'indice de réfraction dépend de la direction de polarisation du faisceau lumineux qui le traverse. Il existe cependant au moins une direction privilégiée pour laquelle l'indice est indépendant de la direction de polarisation. Une telle direction est appelée axe optique du milieu. Elle est notée axe Z sur les figures 5, 6 et 7 et est représentée par une flèche blanche. Dans les milieux naturels, on distingue:

- les milieux uniaxes qui possèdent un unique axe optique;
- les milieux biaxes qui possèdent deux axes optiques.

Les milieux uniaxes ont deux indices de réfraction principaux appelés indices ordinaire et extraordinaire. Ils sont en général notés respectivement $n_o$ et $n_e$. La différence d'indice $\Delta n$ égale à $n_e - n_o$ est alors appelée biréfringence du milieu. Cette différence $\Delta n$ est nulle selon l'axe optique Z et est maximum pour une direction perpendiculaire à cet axe. On distingue deux cas selon le signe de la biréfringence:

- $\Delta n > 0$ : le milieu est dit uniaxe positif ;
- $\Delta n < 0$ : le milieu est dit uniaxe négatif.

Dans ce qui suit, on s'intéresse plus particulièrement à des dispositifs mettant en oeuvre des cristaux biréfringents uniaxe.

La figure 5 représente la propagation d'un mode polarisé à l'intérieur d'un cristal biréfringent 21 d'axe optique Z référencé dans un repère (x, y, z). On a adopté les conventions suivantes. L'axe x est orienté dans la direction de propagation du mode, c'est-à-dire selon la direction du vecteur d'onde $\overleftarrow{k}^{\omega}$. Le plan (x, z) contenant l'axe Z et le vecteur d'onde du champ incident est appelé plan principal. L'axe Z fait dans ce plan un angle $\theta$ avec l'axe x. L'état de polarisation Po du champ normal à ce plan définit une onde ordinaire dite « o » alors qu'un état de polarisation Pe situé dans le plan principal définit une onde extraordinaire dite « e ». L'indice de réfraction pour une onde ordinaire ne dépend pas de la direction de propagation alors qu'il varie pour une onde extraordinaire. Ainsi, l'indice de réfraction dans un cristal anisotrope dépend de l'état de polarisation de l'onde considérée et de sa direction de propagation par rapport aux axes principaux du cristal. Pour une propagation sous un angle $\theta$ par rapport à l'axe Z, l'onde extraordinaire voit un indice de réfraction extraordinaire effectif :

$$\frac{1}{\left(n_e(\theta)\right)^2} = \frac{\cos^2\theta}{\left(n_o\right)^2} + \frac{\sin^2\theta}{\left(n_e\right)^2} \text{ soit encore: } n_e(\theta) = n_o \left(\frac{1+tg^2\theta}{1+\left(n_o/n_e\right)^2 tg^2\theta}\right)^{1/2}$$

Connaissant la variation des différents indices optiques avec la longueur d'onde, il est possible de déterminer pour un matériau donné, pour des modes de propagation à des longueurs d'onde connues, s'il existe des plages d'orientation θ permettant d'obtenir l'accord de phase. Ainsi, l'emploi d'un cristal de béta-borate de baryum ou BBO ou $\beta\, BaB_2O_4$ permet d'obtenir un accord de phase permettant de réaliser une opération de doublement de fréquence. Pour ce type de cristal, l'angle d'accord de phase interne $\theta_{AP}$ vaut environ 23 degrés.

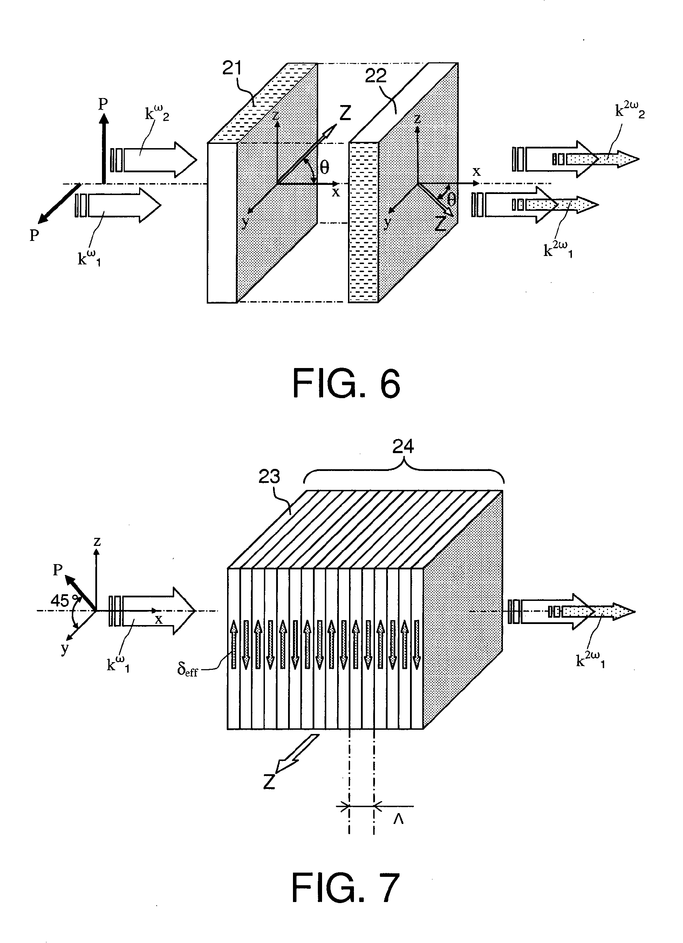

Le dispositif stabilisateur à doublement de fréquence doit fonctionner pour les deux états de polarisation. Pour obtenir cette fonction, on insère dans la cavité deux cristaux 21 et 22 montés tête-bêche dont les orientations cristallographiques sont tournées de 90° afin de traiter séparément les deux états de polarisation des ondes contra-propagatives circulant dans la cavité. La figure 6 représente un montage de ce type en vue éclatée. Dans la réalité, les cristaux 21 et 22 sont collés. Le doublement de fréquence engendré par les deux cristaux est identique quel que soit l'état de polarisation. Si ces cristaux sont assemblés par adhésion moléculaire, on réduit les effets des réflexions parasites dans une configuration monolithique. A titre indicatif, la différence d'indice entre l'indice ordinaire et l'indice de réfraction extraordinaire effectif est $n_o - n_{e\,e}ff$ =1.86 10-2 à une longueur d'onde de propagation de 1.064 $\mu m$.

Une voie alternative à l'accord de phase consiste à employer des dispositifs dits à quasi-accord de phase ou « QAP ». Comme il a été dit, si l'accord de phase n'est pas parfait, le doublement de fréquence ne peut pas se produire. Cependant, on démontre que, si le désaccord de phase est remis à zéro périodiquement, alors le doublement de fréquence peut de nouveau se produire. Pour obtenir cette propriété, le dispositif à doublement de fréquence comporte une structure périodique 24 composée de couches cristallines 23 du même matériau dans laquelle le signe du coefficient non linéaire effectif de chaque couche est inverse de la couche mince suivante comme illustré sur la figure 7 où l'orientation du coefficient non linéaire $\delta_{eff}$ de chaque couche est représentée par une flèche grise.

La période spatiale $\Lambda$ de cette inversion du coefficient non linéaire est : A = $2mL_c$ avec m ordre du quasi-accord de phase et égal à un entier impair et $L_c$ représentant la longueur de cohérence telle que: $L_c = \dfrac{\lambda^\omega}{4(n^{2\omega}-n^\omega)}$  avec

$\lambda^\omega$: longueur d'onde du mode non doublé, $n^\omega$: indice optique à la fréquence $\omega$ et $n^{2\omega}$ indice optique à la fréquence doublée $2\omega$. La condition d'accord de phase associée à cette interaction est : $\overleftarrow{k}^{2\omega} - 2\overleftarrow{k}^\omega - \overleftarrow{K} = 0$ où $\overleftarrow{K}$ est le vecteur d'onde du réseau périodique d'inversion du coefficient non linéaire.

Comme il a été dit, selon l'état de polarisation P du champ par rapport au plan principal, on peut définir une onde d'entrée ordinaire dite « o » ou une onde extraordinaire dite « e ». Il est possible d'obtenir le quasi-accord de phase pour ces deux ondes. De la même façon, les ondes de sortie doublées peuvent être ordinaire ou extraordinaire. On parle ainsi, selon que les ondes d'entrée et de sortie sont toutes ordinaires ou toutes extraordinaires, d'interactions «eee» ou « ooo ». Ainsi, on démontre qu'avec un cristal en $LiNbO_3$ uniaxe négatif, à l'ordre 1, la période vaut $\Lambda$=6.807$\mu m$ pour une interaction « eee » qui est la plus efficace. Cela correspond à un axe optique perpendiculaire au plan des couches périodiquement alternées en termes de signe du coefficient non linéaire comme représenté sur la figure 6. Le coefficient non linéaire effectif est alors exprimé par la relation : $d_{eff} = \left(\dfrac{2}{m\pi}\right)d_{ij}$  où $d_{ij}$ représente l'élément du tenseur non linéaire considéré qui dépend des conditions d'excitation selon les axes o ou e. Ainsi, en couplant les deux ondes contra-propagatives à un cristal non linéaire à 45° par rapport à l'axe Z, on est à même de symétriser l'interaction comme l'illustre la figure 6.

Avantageusement, le milieu à gain et le cristal de stabilisation passif sont un seul et même matériau dopé qui a les propriétés non-linéaires requises pour assurer à la fois l'amplification et le doublage en fréquence.


## Revendications

1.    Gyrolaser permettant la mesure de la vitesse angulaire ou de la position angulaire relative selon un axe de rotation déterminé, ledit gyrolaser comprenant au moins :

- une cavité optique (1) en anneau ;

- un milieu amplificateur (2) à l'état solide ;
- un dispositif magnéto-optique (12, 13, 14) à effet non réciproque ;

agencés de façon que quatre modes de propagation puissent se propager à l'intérieur de la cavité, le premier mode de propagation et le troisième mode de propagation étant polarisés linéairement dans la même direction, le second mode de propagation et le quatrième mode de propagation étant polarisés linéairement perpendiculairement au premier mode et au troisième mode, le premier mode de propagation et le second mode de propagation se propageant dans un premier sens dans la cavité, le troisième mode de propagation et le quatrième mode de propagation se propageant en sens inverse dans la cavité, le dispositif magnéto-optique introduisant un biais fréquentiel entre les modes se propageant dans le premier sens et les modes se propageant en sens inverse, **caractérisé en ce que** ladite cavité comporte également un dispositif stabilisateur (20) de l'intensité des quatre modes de propagation à des niveaux sensiblement équivalents, ledit dispositif comportant au moins un élément optique (21, 22, 24) en cristal non-linéaire du type cristal doubleur de fréquence.

2. Gyrolaser selon la revendication 1, **caractérisé en ce que** le l'élément optique (21, 22) est un cristal biréfringent agencé de façon à générer, à partir d'un mode de propagation ayant une première fréquence optique ($\lambda_1$) un faisceau lumineux à une seconde fréquence optique ($\lambda_2$) double de la première fréquence.

3. Gyrolaser selon la revendication 2, **caractérisé en ce que** le dispositif stabilisateur (20) comporte deux éléments optiques (21, 22) en cristal biréfringent, identiques en forme de lames à faces planes et parallèles, les faces étant disposées perpendiculairement à l'axe de propagation des différents modes de propagation, les deux éléments étant assemblés par une face commune, l'axe cristallographique du premier élément étant perpendiculaire à l'axe cristallographique du second élément.

4. Gyrolaser selon l'une des revendications 2 ou 3, **caractérisé en ce que** l'élément optique (21, 22) est en cristal de béta-borate de baryum ou « BBO » ou $\beta BaB_2O_4$.

5. Gyrolaser selon la revendication 1, **caractérisé en ce que** le l'élément optique (24) comprend un empilement de couches minces planes régulièrement alternées (23), d'épaisseur identique, réalisées dans le même cristal biréfringent uniaxe négatif, les faces des différentes couches étant disposées perpendiculairement à l'axe de propagation des différents modes de propagation, l'axe optique de chaque couche étant parallèle au plan de la couche et orienté dans le même sens et la même direction dans les différentes couches, les directions de polarisation des différents modes de propagation étant orientées à 45 degrés dudit axe optique, le signe du coefficient non linéaire effectif de chaque couche étant inverse de la couche mince suivante.

6. Gyrolaser selon la revendication 5, **caractérisé en ce que** l'épaisseur ($\Lambda$) de chaque couche vaut $\Lambda = 2mL_C$, m étant un nombre entier impair, $L_C$ représentant la longueur de cohérence, $L_C$ étant égale à $L_C = \dfrac{\lambda_1}{4.(n_2 - n_1)}$, $n_2$ et $n_1$ étant les indices optiques du cristal respectivement à la seconde fréquence optique et à la première fréquence optique.

7. Gyrolaser selon la revendication 5, **caractérisé en ce que** l'élément optique (24) est en niobate de lithium ou $LiNbO_3$.

8. Gyrolaser selon la revendication 1, **caractérisé en ce que** le milieu amplificateur (2) fait office de dispositif stabilisateur.

9. Gyrolaser selon la revendication 8, **caractérisé en ce que** le milieu amplificateur (2) est en néodyme dopé par de l'yttrium calcium oxyborate ou YCOB ou $YCa_4O(BO_3)_3$.

10. Gyrolaser selon la revendication 8, **caractérisé en ce que** le milieu amplificateur (2) est en néodyme dopé par de l'yttrium aluminium borate ou YAB ou $YAl_3(BO_3)_4$.

**Claims**

1. A gyrolaser for measuring the angular speed or the relative angular position along a determined axis of rotation, said gyrolaser comprising at least:

- one optical ring cavity (1);
- one solid-state amplifying medium (2);
- one non-reciprocal effect magneto-optical device (12, 13, 14);

arranged so that four propagation modes can propagate inside the cavity, the first propagation mode and the third propagation mode being linearly polarised in the same direction, the second propagation mode and the fourth propagation mode being linearly polarised perpendicular to the first mode and to the third mode, the first propagation mode and the second propagation mode propagating in a first direction in the cavity, the third propagation mode and the fourth propagation mode propagating in the opposite direction in the cavity, the magneto-optical device introducing a frequency bias between the modes propagating in the first direction and the mode propagating in the opposite direction,
**characterised in that** said cavity further comprises a device (20) for stabilising the intensity of the four propagation modes at substantially equivalent levels, said device comprising at least one optical element (21, 22, 24) made from non-linear crystal of the frequency-doubler crystal type.

2. The gyrolaser according to claim 1, **characterised in that** the optical element (21, 22) is a birefringent crystal that is arranged so as to generate, from a propagation mode with a first optical frequency ($\lambda_1$), a light beam with a second optical frequency ($\lambda_2$) that is double that of the first frequency.

3. The gyrolaser according to claim 2, **characterised in that** the stabilising device (20) comprises two identical optical elements (21, 22) made from birefringent crystal that are in the form of plates with flat and parallel surfaces, said surfaces being disposed perpendicular to the axis of propagation of the different propagation modes, the two elements being assembled via a common face, the crystallographic axis of the first element being perpendicular to the crystallographic axis of the second element.

4. The gyrolaser according to claim 2 or 3, **characterised in that** the optical element (21, 22) is made from beta-barium borate crystal or "BBO" or $\beta BaB_2O_4$.

5. The gyrolaser according to claim 1, **characterised in that** the optical element (24) comprises a stack of regularly alternating thin plane layers (23) of identical thickness realised in the same negative uniaxial birefringent crystal, the faces of the different layers being disposed perpendicular to the axis of propagation of the different propagation modes, the optical axis of each layer being parallel to the plane of the layer and oriented in the same sense and the same direction in the different layers, the polarisation directions of the different propagation modes being oriented at 45 degrees to said optical axis, the sign of the effective non-linear coefficient of each layer being the reverse of that of the next thin layer.

6. The gyrolaser according to claim 5, **characterised in that** the thickness (A) of each layer equals A = $2mL_c$, m being an odd whole number, $L_c$ representing the length of coherence, $L_c$ being equal to $L_c = \dfrac{\lambda_1}{4.(n_2 - n_1)}$, $n_2$ and $n_1$ being the optical indices of the crystal at the second optical frequency and at the first optical frequency, respectively.

7. The gyrolaser according to claim 5, **characterised in that** the optical element (24) is made from lithium niobate or $LiNbO_3$.

8. The gyrolaser according to claim 1, **characterised in that** the amplifying medium (2) acts as a stabilising device.

9. The gyrolaser according to claim 8, **characterised in that** the amplifying medium (2) is made from neodymium doped yttrium calcium oxyborate or YCOB or $YCa_4O(BO_3)_3$,

10. The gyrolaser according to claim 8, **characterised in that** the amplifying medium (2) is made from neodymium doped yttrium aluminium borate or YAB or $YAl_3(BO_3)_4$.

**Patentansprüche**

1. Laserkreisel, der die Messung der Winkelgeschwindigkeit oder der relativen Winkelposition auf einer bestimmten Rotationsachse zulässt, wobei der Laserkreisel wenigstens Folgendes umfasst:

   - einen optischen Ringraum (1);
   - ein Verstärkungsmedium (2) im festen Zustand;
   - eine magnetooptische Vorrichtung (12, 13, 14) mit nicht reziproker Wirkung;

   so gestaltet, dass vier Ausbreitungsmodi im Innern des Raums propagieren können, wobei der erste Ausbreitungsmodus und der dritte Ausbreitungsmodus linear in derselben Richtung polarisiert sind, der zweite Ausbreitungsmodus und der vierte Ausbreitungsmodus linear lotrecht zum ersten und zum dritten Modus polarisiert sind, wobei sich der erste Ausbreitungsmodus und der zweite Ausbreitungsmodus in einer ersten Richtung in dem Raum ausbreiten, wobei sich der dritte Ausbreitungsmodus und der vierte Ausbreitungsmodus in umgekehrter Richtung in dem Raum ausbreiten, wobei die magnetooptische Vorrichtung einen Frequenz-Bias zwischen den Ausbreitungsmodi in der ersten Richtung und den Ausbreitungsmodi in der Umkehrrichtung einführen, **dadurch gekennzeichnet, dass** der Raum auch eine Vorrichtung (20) zum Stabilisieren der Intensität der vier Ausbreitungsmodi auf im Wesentlichen äquivalenten Niveaus umfasst, wobei die Vorrichtung wenigstens ein optisches Element (21, 22) aus einem nichtlinearen Kristall des Frequenzdopplerkristalltyps umfasst.

2. Laserkreisel nach Anspruch 1, **dadurch gekennzeichnet, dass** das optische Element (21, 22) ein doppelbrechender Kristall ist, der so ausgelegt ist, dass er von einem Ausbreitungsmodus mit einer ersten optischen Frequenz ($\lambda_1$) einen Lichtstrahl mit einer zweiten optischen Frequenz ($\lambda_2$) vom Doppelten der ersten Frequenz erzeugt.

3. Laserkreisel nach Anspruch 2, **dadurch gekennzeichnet, dass** die Stabilisiervorrichtung (20) zwei identische optische Elemente (21, 22) aus einem doppelbrechenden Kristall in Form von Platten mit ebenen und parallelen Flächen umfasst, wobei die Flächen lotrecht zur Ausbreitungsachse der verschiedenen Ausbreitungsmodi angeordnet sind, wobei die beiden Elemente über eine gemeinsame Fläche zusammengefügt werden, wobei die kristallografische Achse des ersten Elements lotrecht zur kristallografischen Achse des zweiten Elements ist.

4. Laserkreisel nach Anspruch 2 oder 3, **dadurch gekennzeichnet, dass** das optische Element (21, 22) ein Kristall aus beta-Bariumborat oder "BBO" oder $\beta BaB_2O_4$ ist.

5. Laserkreisel nach Anspruch 1, **dadurch gekennzeichnet, dass** das optische Element (24) einen Stapel von regelmäßig abwechselnden ebenen dünnen Schichten (23) von identischer Dicke umfasst, die in demselben einachsigen negativen doppelbrechenden Kristall realisiert sind, wobei die Flächen der verschiedenen Schichten lotrecht zur Ausbreitungsachse der verschiedenen Ausbreitungsmodi angeordnet sind, wobei die optische Achse jeder Schicht parallel zur Ebene der Schicht ist und im selben Sinne und in derselben Richtung in den unterschiedlichen Schichten ausgerichtet ist, wobei die Polarisationsrichtungen der verschiedenen Ausbreitungsmodi in einem Winkel von 45 Grad zur optischen Achse orientiert sind und wobei das Vorzeichen des effektiven linearen Koeffizienten jeder Schicht umgekehrt zur folgenden dünnen Schicht ist.

6. Laserkreisel nach Anspruch 5, **dadurch gekennzeichnet, dass** die Dicke ($\Lambda$) jeder Schicht A = $2mL_C$ ist, wobei m eine ungerade ganze Zahl ist, wobei $L_C$ die Kohärenzlänge repräsentiert, wobei $L_C = \dfrac{\lambda_1}{4.(n_2 - n_1)}$ ist, wobei $n_2$ und $n_1$ die optischen Indexe des jeweiligen Kristalls mit der zweiten optischen Frequenz und der ersten optischen Frequenz sind.

7. Laserkreisel nach Anspruch 5, **dadurch gekennzeichnet, dass** das optische Element (24) aus Lithiumniobat oder $LiNbO_3$ ist.

8. Laserkreisel nach Anspruch 1, **dadurch gekennzeichnet, dass** das Verstärkungsmedium (2) als Stabilisiervorrichtung dient.

9. Laserkreisel nach Anspruch 8, **dadurch gekennzeichnet, dass** das Verstärkungsmedium (2) ein mit Yttriumcalciumoxyborat oder YCOB oder $YCa_4O(BO_3)_3$ dotiertes Neodym ist.

**10.** Laserkreisel nach Anspruch 8, **dadurch gekennzeichnet, dass** das Verstärkungsmedi (2) ein mit Yttriumalumini-umborat oder YAB oder $YAl_3(BO_3)_4$ dotiertes Neodym ist.

FIG. 1

# FIG. 2

# FIG. 3

## FIG. 4

## FIG. 5

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 3854819 A
- US 7548572 B
- US 7230686 B
- WO 2009077314 A, S. Schwartz, G. Feugnet et J.-P. Pocholle

**Littérature non-brevet citée dans la description**

- **S. SCHWARTZ ; G. FEUGNET ; P. BOUYER ; E. LARIONTSEV ; A. ASPECT ; J.-P. POCHOLLE.** *Phys. Rev. Lett.,* 2006, vol. 97, 093902